# EUROPEAN PATENT SPECIFICATION

(11) **EP 4 164 446 B1**
(45) Date of publication and mention of the grant of the patent: **28.01.2026**
(21) Application number: 21825700.4
(22) Date of filing: 01.06.2021
(51) Int. Cl.: A43B 7/14, A61F 5/14, A43B 3/00, A43B 17/00, A43B 17/02, A43D 1/02, B29D 35/12, B33Y 80/00

(54) **MODULAR FOOTBED ASSEMBLIES AND METHOD OF MANUFACTURING SAME**
MODULARE FUSSBETTANORDNUNGEN UND VERFAHREN ZUR HERSTELLUNG DAVON
ENSEMBLE DE LITS DE PIED MODULAIRES ET PROCÉDÉ DE FABRICATION DE CELUI-CI

(30) Priority: 16.06.2020 US 202063039779 P
(43) Date of publication of application: 19.04.2023
(73) Proprietor: Insite Performance, LLC, Portsmouth, NH 03801 (US)
(72) Inventor: DIHARCE, Gregory, Portsmouth, New Hampshire 03801 (US); HEALY, John, Portsmouth, New Hampshire 03801 (US)
(74) Representative: IK-IP LTD
(86) International application number: PCT/US2021/035312
(87) International publication number: WO 2021/257274

(56) References cited:
- FR-A- 1 004 501
- US-A- 4 360 027
- US-A- 4 766 679
- US-A1- 2004 181 971
- US-A1- 2008 047 166
- US-A1- 2009 119 947
- US-A1- 2018 070 670
- US-A1- 2020 154 827
- US-B2- 10 653 204
- US-S- D 383 894

## Description

### CROSS-REFERENCE TO RELATED APPLICATIONS

This application claims priority to U.S. Provisional Application Serial No. 63/039,779, filed June 16, 2020, entitled "MODULAR FOOTBED ASSEMBLIES AND METHOD OF MANUFACTURING SAME,".

### FIELD OF THE DISCLOSURE

The present disclosure generally relates to footbeds used in footwear and used with footwear of all types including casual, dress, work, and athletic footwear. More specifically, the present disclosure relates to modular footbeds that provide superior comfort and performance and methods of manufacturing same.

### BACKGROUND OF THE DISCLOSURE

Footbeds (also commonly referred to as sockliners or insoles) are a common component of many types of footwear with a large variation in design, shape, materials, cost, and overall quality. Much of this variation exists between footwear categories and footwear brands to adapt the design of the footbed into the design of the shoe, the intended consumer (athlete, casual, etc.), and price point of the footwear product.

Footbeds are a primary source of comfort and function in footwear as they are in direct contact with the plantar surface of the foot where high loads and pressures are realized. Typically, footbeds are made from a relatively thin (3.0-5.0 mm) layer of foam topped by a thin polyester fabric (top cover) that is adhered to the foam.

The footbed is often a flat piece of foam that does not provide sufficient cushioning, pressure reduction, and support for the foot. Footbeds that are molded only from inexpensive foam will quickly breakdown and take a compression set. This compression set changes the shape of the footbed and reduces the cushioning capability by as much as 75%, thus effecting overall comfort and support for the foot. Additionally, standard insoles provide inferior performance due to variance in foot shapes and sizes. Conversely, co-molded insoles are often expensive to manufacture. [5a] US 2018/070670 discloses an insole providing cushioning and control of foot motion, which includes a stability cradle and a lateral midfoot/heel pad secured to the underside of the base of the insole, as well as a supplemental heel pad attached to lay over a portion of the lateral midfoot/heel pad. US 2004/181971 discloses a footbed for insertion into a shoe. The footbed includes an insole with a heel area, a metatarsal area and an arch area between the heel area and the metatarsal area. The insole also includes a lateral side and a medial side. A support is attached to the insole and extends between the arch area and the heel area of the insole. The support extends from the lateral side to the medial side of the insole to reduce pronation in a foot that is supported by the footbed. US 2020/154827 discloses a removable insole for insertion into footwear, that comprises a forefoot portion integral to the insole and extending at least to a metatarsal of a foot and including a resilient layer, the resilient layer including at least two non-contiguous resilient layer sections (including a big toe section). The at least two non-contiguous resilient sections include at least four resilient layer subsections in some embodiments, a continuous rear portion that includes a medial longitudinal arch support portion, a heel surrounding portion and a lateral longitudinal arch support portion; and a heel portion. In some embodiments, the forefoot is customizable by having different levels of hardness for the subsections and big toe section. The medial longitudinal arch support portion includes a detachable cushion configured to adjust a height of the medial longitudinal arch and to support the foot during pronation of the foot.

### SUMMARY OF THE DISCLOSURE

The invention is defined in the independent claims, with optional features being defined in the dependent claims. In at least some examples, a footwear assembly comprises an elastomeric foam layer having a rear foot region, a midfoot region and a front foot region and one or more protrusions, and a semi-rigid arch cookie that includes a heel portion, a pair of arch supports extending from the heel portion toward a toe region, the pair of arch supports being of unequal length and having ends that are not connected to one another, the heel portion and the pair of arch supports being continuous, and at least one window defining a perimeter and being disposed in at least one of the heel portion and the pair of arch supports. The one or more protrusions align with the at least one window of the semi-rigid arch cookie, each of the one or more protrusions being complementary to one of the at least one window, each of the one or more protrusions having a shape and/or size that is equal or similar to one of the at least one window, and that aligns with that at least one window, and the one or more protrusions having a geometry configured to extend through the complementary at least one window and to interlock with the complementary at least one window, wherein the interlocking is provided by the one or more protrusions having a negative draft angle to keep the semi-rigid arch cookie against a base of the elastomeric foam layer or wherein the interlocking is provided by the one or more protrusions having a notch with a widened base into which the semi-rigid arch cookie snaps when the one or
more protrusions have been pushed through the complementary at least one window.

### BRIEF DESCRIPTION OF THE DISCLOSURE

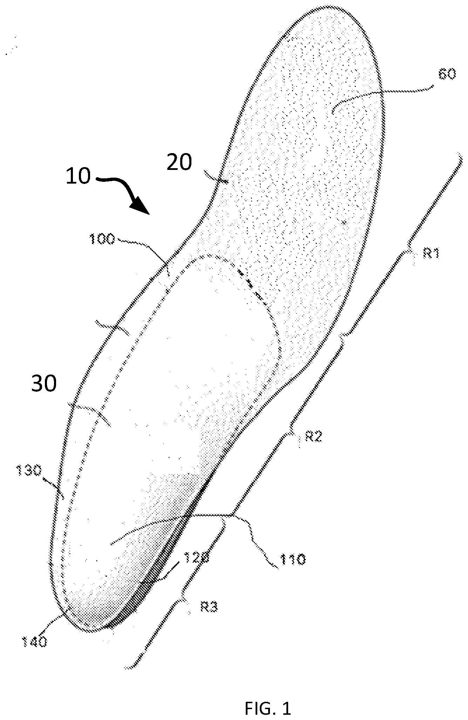

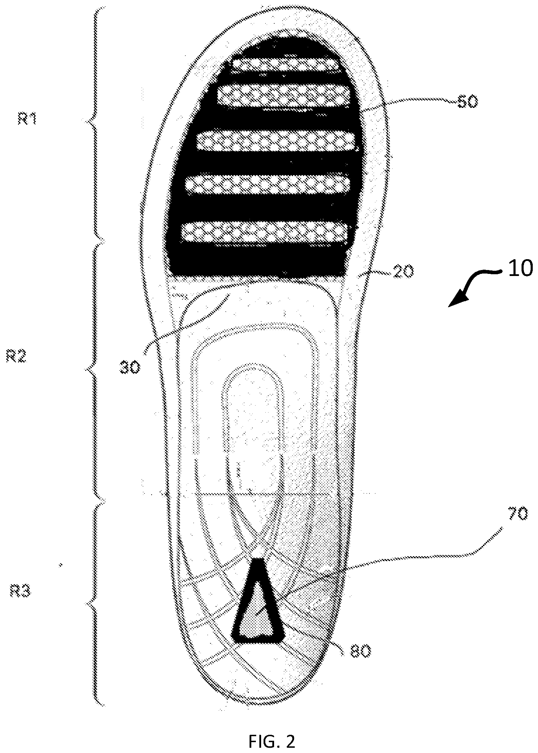

Various embodiments of the presently disclosed devices and methods are shown herein with reference to the drawings (except for Figures 1 and 2), wherein:
FIG. 1 is a schematic isometric top view of a footbed assembly not part of the claimed invention;
FIG. 2 is a schematic bottom view of the bottom of a footbed assembly not part of the claimed invention;
FIG. 3 is a schematic bottom view of a footbed assembly with a single window in an arch cookie;
FIG. 4 is a schematic bottom view of the arch cookie of FIG. 3;
FIG. 5 is a schematic bottom view of a footbed assembly with multiple windows in an arch cookie;
FIG. 6 is a schematic bottom view of an arch cookie having multiple windows;
FIG. 7 is a schematic lateral view of a footbed assembly with multiple windows in an arch cookie;
FIG. 8 is a schematic illustration showing one example of a footbed assembly having a foam layer and an arch cookie; and
FIGS. 9A-C illustrate cross-sections showing the coupling of foam layers with arch cookies.

Various embodiments of the present invention will now be described with reference to the appended drawings. It is to be appreciated that these drawings (except for Figures 1 and 2), depict only some embodiments of the invention and are therefore not to be considered limiting of its scope, which is defined by the appended claims.

### DETAILED DESCRIPTION

Despite the various improvements that have been made to footwear and their methods of manufacture, conventional devices suffer from some shortcomings as described above.

Footbeds may include a shape in the top surface that attempts to match the contours of the foot. These footbeds can be made with more durable materials such as polyurethane foams and support structures made with composite materials such as injected plastics and carbon fiber so the footbed shape is maintained. Footbeds from corporations such as Spenco Medical Corp. and Superfeet Worldwide are examples.

Higher quality materials may be used to produce such footbeds, including materials that are more durable, stiffer, and shaped to match the foot. It should be understood that using more durable, higher quality materials will reduce the breakdown of materials and maintain the like-new performance.

A footbed for an article of footwear that demonstrates an ideal geometry for comfort, foot control and stability, and ambulatory efficiency is disclosed in U.S. Patent No. 10,653,204. The footbed described in the '204 Patent is the result of extensive research, development, and mathematical modeling of thousands of human feet. Footbeds using the geometry disclosed in the '204 Patent provide excellent performance in stability and comfort, and the use of a large number of human subjects contributing to the scanned data ensure that footbed represents an ideal geometry for the majority of the population.

Conventional footbeds including certain one disclosed in the '204 Patent are typically co-molded composites of foam and semi-rigid plastic. The co-molding process of joining foams and semi-rigid plastics are produced at a price point that might be too expensive for certain shoe models. Specifically, each size of footbed in a size run requires separate molds for the semi-rigid plastic and the mating foam. The cost of these molds is then passed to the consumer in the cost of the footbed. Co-molding of footbeds similar to footbeds described in the '204 Patent also adds cost and complexity to the footwear manufacturer. An article of footwear with an expensive footbed requires a certain cost structure for the entire shoe and predisposes a price point, sales volume requirement, and capital allocation for molds.

Conversely, less expensive articles of footwear utilize inexpensive components such as the footbed. This often means that the footbed is made from a single sheet of non-molded foam typically known as sheet stock foam. Sheet stock foams are usually homogeneous with a constant thickness. While they are less expensive, they do not provide the comfort and stability produced when using a molded footbed made from composite materials.

Thus, it would be beneficial to provide a footbed that delivers the comfort and stability features of footbeds created with co-molded methods as described in the '204 Patent, but at lower price points and/or with greater flexibility in supply planning and mold cost allocation. Such products may allow for even greater flexibility of comfort, stability, cost, supply planning, and mold cost allocation by allowing the footwear manufacture to choose the final selection of footbed features and costs when the shoe manufacturing is close to completion and with flexible product supply planning.

Therefore, there is a need for further improvements to the devices, systems, and methods of forming footbeds. Among other advantages, the present disclosure may address one or more of these needs.

As shown in FIGS. 1 and 2, and not being part of the claimed invention, a footbed 10 includes a foam layer 20 that runs the length of the footbed 10 from toe to heel, with a rigid or semi-rigid heel plate 30 attached to the full-length foam 20 and extending from the rear part of the footbed 10 to a point in the midfoot R2. The midfoot R2 point may be proximal to the position of first and fifth metatarsal heads of the foot. The heel plate 30 has a geometry designed to provide support and comfort to the heel and midfoot R2 region of the foot by improving cushioning and reducing pressure on the plantar foot surface.

The shape resembles the shape of the plantar surface of the foot. The rigidity of the heel plate 30 helps maintain the shape of the geometry. In the forefoot R3 and toe region of the footbed 10 a non-slip material 50 is adhered to the lower portion of the full-length foam 20 to add rigidity to the foam to keep the foam from wrinkling during use. Additionally, the non-slip material 50 keeps the footbed 10 from slipping forward in the shoe by adding friction between the footbed 10 and lasting board of the shoe. Ideally, the heel plate 30 includes a cutout 80 on the bottom of the heel plate that allows the full-length foam to protrude 70 through the semi-rigid heel plate such that the foam is in contact with the shoe's lasting board providing shock absorption. Additionally, the foam protruding 70 through the heel plate will add friction between the shoe's lasting board and the footbed 10 providing additional friction and aid in keeping the footbed 10 from moving during use. The protruding foam 70, due to its compliance, also supplies additional shock absorption as the foam 70 compresses during loading prior to the semi-rigid heel plate 30 contacting the lasting board.

Some of the components of a footbed according to this disclosure are shown in FIGS. 1 and 2, and the following nomenclature may be used throughout the specification to describe some of these components:

| **Number** | **Component** / **Area** |
|---|---|
| 10 | Footbed |
| 20 | Full Length Foam Base |
| 30 | Heel Plate |
| 40 | Midfoot Arch |
| 50 | Non-slip forefoot |
| 60 | Top Cover |
| 70 | Heel Plate Foam Projection |
| 80 | Heel Plate Cut Out |
| 90 | Heel Cup Wall |
| 100 | Height of Arch |
| 110 | Heel Cup |
| 120 | Lateral Heel Cup Wall |
| 130 | Medial Heel Cup Wall |
| 140 | Rear Heel Cup Wall |
| R1 | Rearfoot Region of Footbed |
| R2 | Midfoot Region of Footbed |
| R3 | Forefoot Region of Footbed |

The footbed base 20 may be made from a resilient foam material produced with techniques such as injection or compression molding and made from materials such as foamed polyurethane or foamed ethylvinyl acetate (EVA). Additional and less common foams known to the industry such as foamed rubber or Polyethelene (PE) foam may also be used. The foam is typically of a specific gravity (SG) ranging from 0.15 - 0.40 with a material hardness between 15 & 50 on the asker C scale. These types of foams are common in the footwear industry and known to provide quality cushioning and comfort characteristics to the wearer. The footbed base 20 is of a relatively consistent thickness throughout the footbed 10 with thicker sections in the midfoot R2 to accommodate the arch area 40 and shaped to match the plantar foot surface. The heel plate 30 is made from a material that is more rigid than the foam 20 used for the footbed base 20 and is commonly made from a plastic material that is produced via injection or compression molding techniques. Plastics used for the heel plate 30 may include nylon, polyurethane, EVA, polycarbonate, and peebax. These plastics have a specific gravity in the range of 1.0 - 1.2 and when molded with the above techniques have a hardness of 50 - 90 on the shore A scale. Composites such as carbon fiber may also be used with physical characteristics similar to the plastics mentioned above.

The heel plate 30 is adhered to the bottom surface of the footbed base 20 in the heel region R3 and the non-slip material 50 is adhered to the bottom surface of the footbed base 20 in the forefoot R1 region of the footbed 10. The materials may be adhered to each other using adhesives known in the industry or by co-molding the materials via heat and pressure that effectively melts the outer layer of each material to the other.

The heel plate 30 provides the primary shape of the footbed 10 with a stiffness and materials that resists long term deformation. The heel plate 30 is attached to the footbed base foam 20 using standard adhesives known in the industry. With the footbed base 20 foam adhered to the heel plate 30, the foam takes the shape of the heel plate 30 and thus has the optimized geometry to match the plantar foot surface. The heel plate is adhered to and positioned on the footbed base 20 from a point furthest in the heel to a point in the midfoot R2 that is proximal to the 1^{st} and 5^{th} metatarsal heads of the foot to ensure comfort and compliance at the bending joints of the foot.

The contours of the heel plate 30 that provide the primary shape of the footbed 10 are critical for comfort and support of the foot. Areas within this shape that are significant to the function of the footbed 10 include the heel cup depth, heel cup diameter, medial heel cup wall angle, lateral heel cup wall angle, rear heel cup wall angle, medial heel cup wall height, lateral heel cup wall height, rear heel cup wall height, arch height, and arch spring.

In at least some examples, a modular system may be used to form the footbed and improve product planning, costs, and configurability. Such footbeds may enable the manufacturer to delay the supply planning of footbeds and selectively choose the footbed configuration for the appropriate article of footwear (and its price point) without making changes to the cost structure and manufacturing methods of the footbed. This allows manufacturers to utilize one component stream of footbeds for multiple shoes styles and price points, thereby, enhancing supply efficiencies and component flexibility when creating an article of footwear.

In at least some examples, the efficiencies described in the above paragraph are created by utilizing two separate manufacturing streams. A first stream of manufacturing may be used to create an arch cookie including a semi-rigid heel cup and arch of various shapes and/or sizes using, for example, the techniques described in the '204 Patent. The term "arch cookie" may be used herein to include a semi-rigid component. The term "semi-rigid" may include suitable materials that are tested for flexural modulus through ASTM D790. In at least some examples, "semi-rigid" includes materials having a flexural modulus in the range of 0.01 to 4.50 GPa. The arch cookie may include at least a portion of the heel cup and at least a portion of an arch. A second stream of manufacturing creates the molded foam that forms the top portion of the footbed. One familiar with the art of footwear manufacturing will understand that selectively choosing to include or exclude the semi-rigid heel cup and arch of a footbed will vary the overall cost of the footbed. Specifically, excluding a material from a footbed will reduce the total volume of material, thereby affecting the volume of the footbed and the fit of the interior portion of the shoes that accepts a user's foot. Described below are the unique methods and features that allow this footbed to be constructed with or without a semi-rigid arch and heel cup without having a negative effect on overall fit and comfort. The option of including a heel cup and arch support can be made at any point during the design, development, or supply planning steps. The choice can also be made by the consumer at the time of purchase or during use by coupling and decoupling the arch cookie from the footbed foam to meet their desired comfort needs.

A semi-rigid arch cookie may be made from common molding materials and techniques such as carbon fiber, plastics, and other composites and combined with foam polymers such as EVA or polyurethane to form a footbed structure that may enhance the comfort, ambulatory efficiency, and stability of a user when the footbed assembly is used in an article of footwear.

Those skilled in the art of footwear manufacturing, biomechanics, orthopedic medicine, and podiatry may agree on the optimal materials and geometry of a footbed included in an article of footwear. However, the marketplace may have concerns and constraints with cost, materials, and features and benefits of shoes for different brands. For this reason, a flexible process that allows for variations in quality and construction of components would be beneficial. Moreover, individual tastes, styles, price to quality, and functional requirements can vary widely with consumers.

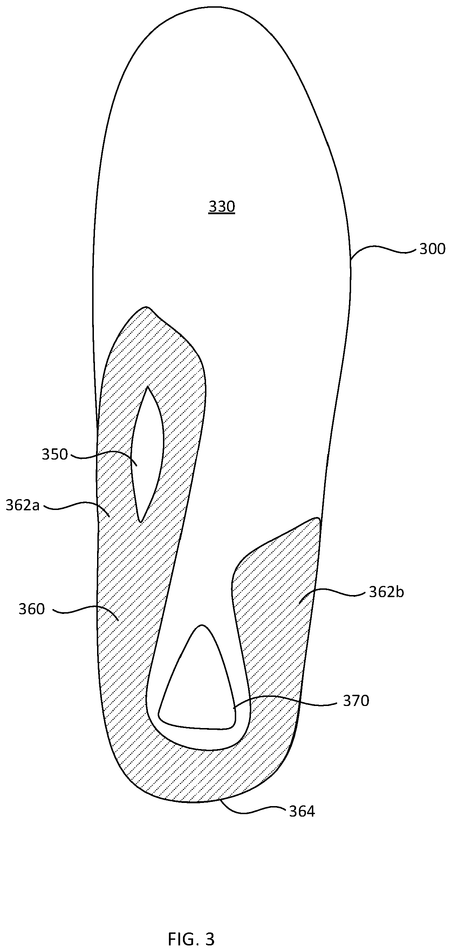

FIGs. 3-7 show examples of modular footbeds according to embodiments of the present disclosure. Said footbed assemblies provide flexible features, benefits, and cost by allowing the coupling and decoupling of a semi-rigid arch cookie from a foam layer. The main body of the footbed is designed to accept a detachable, semi-rigid arch cookie such that it works effectively if the semi-rigid arch cookie is coupled to the footbed main body or if the arch cookie is removed. One skilled in the art will appreciate that certain measurements, volumes, and tolerances may be achieved in order for the footbed to work effectively. These specific geometries and tolerances may be achieved whether or not the semi-rigid arch and heel cup is included.

FIG. 3 is a view of the dorsal surface of the footbed and, therefore, shows the surface that interacts with the lasting board of an article of footwear. The opposing surface (not shown) interacts with the foot and generally follows the shape of the plantar surface of the foot. The footwear assembly 300 shows a footbed with a full-length elastomeric foam 330 and a semi-rigid arch cookie 360. Arch cookie 360 may include arch portions 362a,362b and a heel cup 364. Arch portions 362a,362b may be in the form of lateral branches that extend from the heel cup toward the toes. In the example shown, arch portion 362a is longer than arch portion 362b. The three components (i.e., heel cup and two arch portions) are continuous. In some examples, the arch cookie is configured and arranged to support the first metatarsal, extend down toward the longitudinal arch, curve to provide an extended heel support designed to wrap around the calcaneus pad.

In one example, semi-rigid arch cookie 360 is positioned under the medial arch and wraps around the heel to the lateral side of the footbed 300. The arch cookie 360 may include one or more voids or windows 350 that allow the elastomeric foam 330 to protrude through the window. The size and position of the cut-out thru-window 350 can be designed to provide different levels of comfort and support. It also provides visual appeal for the user and reduces the weight of footbed assembly 300. One can appreciate that one skilled in the art may determine different configurations where the size, shape, and position of the cut out thru-window 350 is varied to achieve different results. A semi-rigid guitar pick feature 370 may also be disposed adjacent the heel, the arch cookie 360 being configured to wrap around the guitar pick feature.

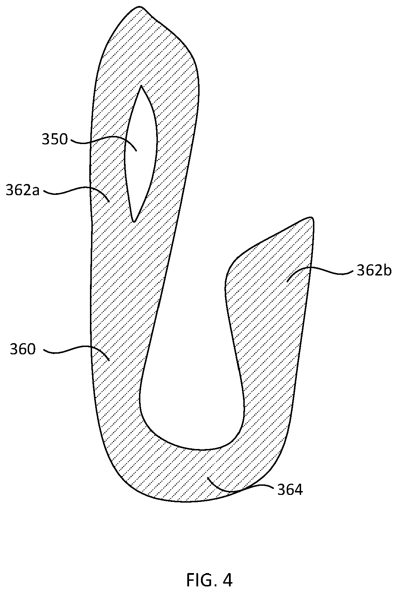

FIG. 4 is a detailed bottom view of a semi-rigid arch cookie 360 with a single cutout thru-window 350. The single cut out thru-window 350 in the area of the medial arch allows for the polymer elastomeric footbed foam 330 to protrude through the cutout thru-window 350. The semi-rigid arch cookie 360 may be manufactured from various plastics and composites that can be molded via injection molding or heat forming. In at least some examples, the arch cookie may be formed using additive manufacturing techniques (e.g., 3D printing or the like). In at least some examples, the arch cookie is bespoke (i.e., it is custom produced and tailored to a particular individual). Alternatively, the geometry of the arch cookie is formed based on a selection of scans from a population, and the shape (e.g., length, width, thickness, profile, curvatures, etc.) is selected at least partly based on the methods and techniques of U.S. Patent No. 10,653,204, which are incorporated by reference herein. For example, the arch cookie geometry may be based at least partly on one or more of the seven representative measurements described in the '204 Patent.

The semi-rigid arch cookie 360 may have the same or a higher modulus/stiffness than the polymer elastomeric foam 330. Specifically, foam 330 may have an ASKER C Hardness in the range of 8 to 50, while arch cookie 360 may have a flexural modulus in the range of 0.01 to 4.5 GPa per ASTM D790.

The semi-rigid arch cookie 360 and footbed polymer elastomeric foam 330 components may be permanently molded together with various co-molding processes. If it is desired, a non-permanent attachment may be achieved by using a non-permanent method such as an adhesive sticker (peel-and-stick) or hook-and-loop attachment. A permanent attachment may also be achieved by using a permanent adhesive, such as cement.

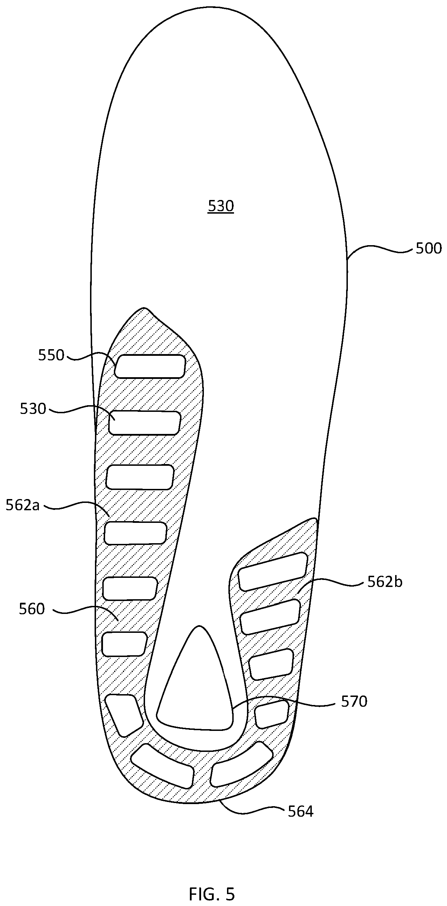

FIG. 5 is a footbed assembly 500 constructed from a polymer and elastomeric foam 530 and a semi-rigid arch cookie 560. Arch cookie 560 is similar to arch cookie 360 and includes a pair of arch portions 562a,562b and a heel portion 564, but it includes a large number of cut-outs or windows 550. As shown, the windows 550 are disposed in both arch portions 562a,562b and heel portion 564. It will be understood, however, that the windows may be limited to any one or two of the three portions, or to none of them.

The multiple cut-out thru windows 550 may allow the footbed to be used in two different configurations. In the first configuration the polymer elastomeric footbed foam is joined together with the semi-rigid arch cookie 560. The arch cookie 560 may provide additional structure, support, and comfort to the wearer. The two components can be joined with common non-permanent adhesives commonly used with "peel-and-stick" applications. This "peel-and-stick" mechanism allows for either the user or manufacturer to choose the desired configuration depending on factors such as cost and personal preference. If the wearer or manufacturer decides to omit the semi-rigid arch cookie 560 the footbed consisting of only the polymer elastomeric foam 530 is placed in the article of footwear. The multiple cut-out thru-windows 550 of the arch cookie 560 associated design of the polymer elastomeric footbed foam 530 make it possible for the footbed to fit properly into the article of footwear without changing the internal volume of the article of footwear and thereby keeping the fit consistent. In some examples, the foam 530 has a number of complementary protrusions 531 that align with windows 550 of arch cookie 460. Each of protrusions 531 may be complementary to one of the windows. That is, each of the protrusions may have a shape and/or size that is equal or similar to one of the windows, and that aligns with that window. When the protrusions 531 extend through the complementary windows 550 they provide interlocking between the two components to better secure them together. In at least some examples, the length of the protrusions is equal to the length of the window so that the bottom of the secured assembly sits flush with the bottom of a shoe.

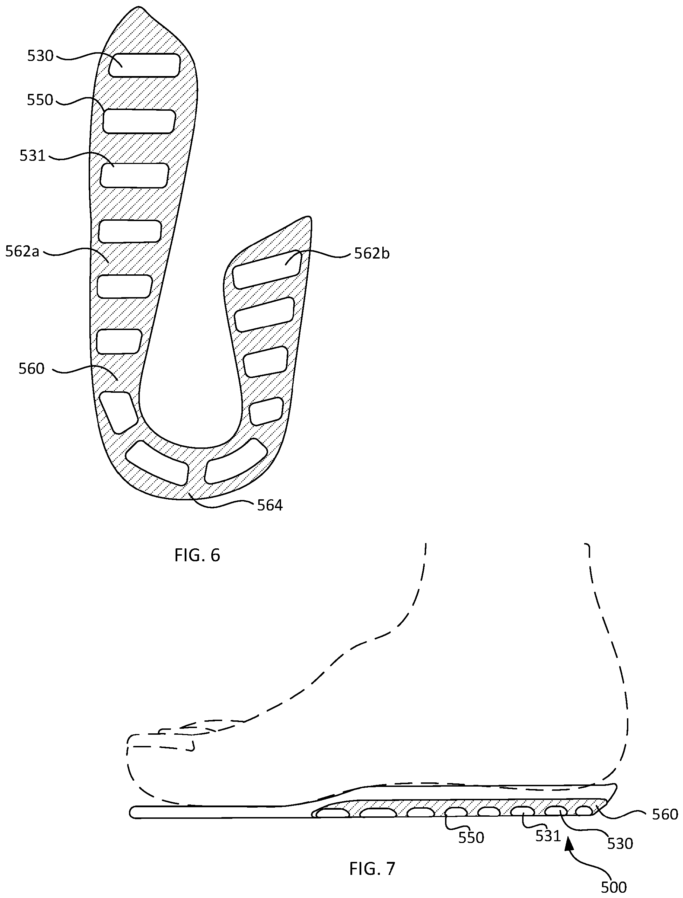

Figure 6 is a bottom view of the arch cookie 560 having windows 550. This component may be manufactured using various materials and manufacturing processes commonly used to mold shapes into semi-rigid forms. Molding processes include injection molding, heat forming, carbon fiber layup, and 3D printing. Numerous plastics and composite materials may be used including polymer plastics such as polyurethane, EVA, Nylon, carbon fibers, and other materials suited for this construction. The multiple cut-out thru-windows 550 are positioned to allow the footbeds polymer, elastomeric foam 530 to pass through as protrusions 531 via the cutout thru-windows 550. This configuration allows for a consistent positioning and fit into the shoe cavity. Including the semi-rigid arch cookie via adhesive (permanent or non-permanent) may provide additional support and comfort but will not alter the position and, therefore, fit of the footbed in the shoe cavity.

Figure 7 is a lateral view of the footbed assembly 500 having an arch cookie 560 and a foam 530. Arch cookie 560 includes multiple windows 550 as previously described. The multiple thru windows 550 allow the polymer elastomeric foam 530 to protrude through at certain protrusions 531 and interact with the shoe's lasting board. This feature means that the footbed may be positioned consistently in the shoe cavity with or without the presence of the arch cookie.

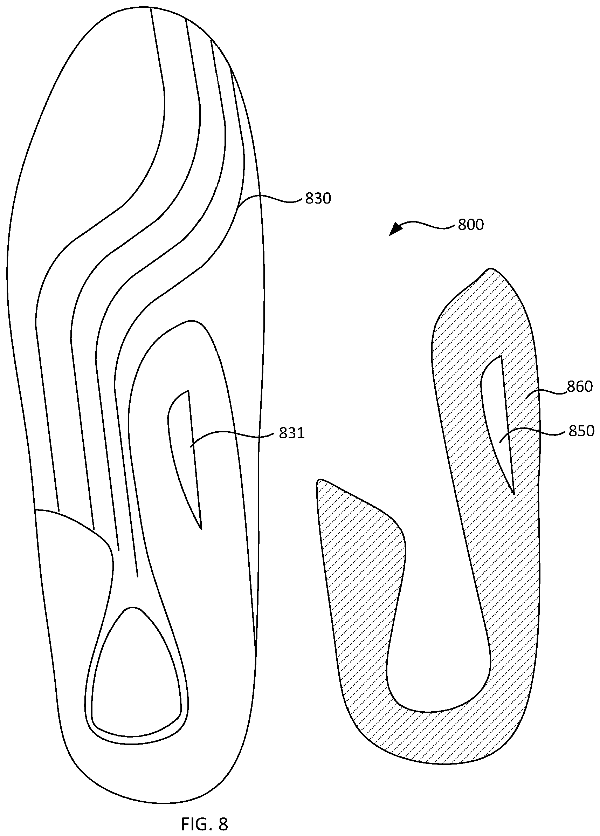

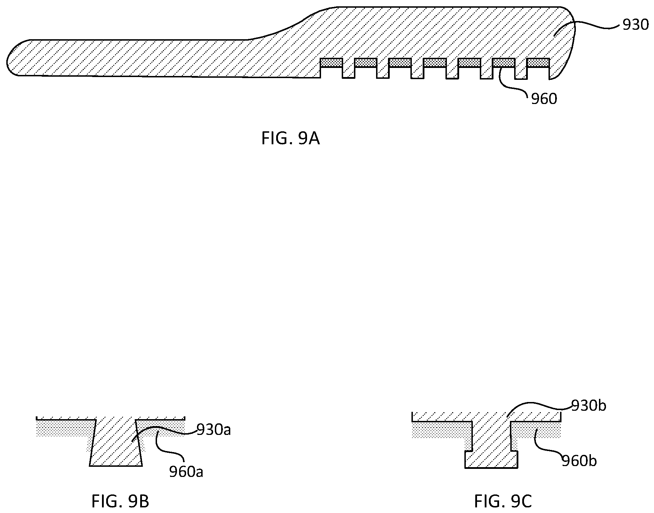

FIG. 8 is a schematic illustration of one example of a footbed assembly 800 having an arch cookie 860 with windows 850, and a foam 830 having protrusions 831. As shown in the cross-sectional views of FIGS. 9A-C certain techniques may be used to couple the foam to the arch cookie. Specifically, a mechanical interlock may be formed between the foam and the plastic/composite arch cookie. In the embodiment shown in FIG. 9A, the interlocking is shown between the foam 930 and the arch cookie 930. In some variations, the foam pillars 930a that protrude through the arch cookie 960 may have a shape to enhance the locking of the two components. This may be used in addition to, or instead of, a semi-permanent adhesive and/or hook-and-loop attachment.

In FIG. 9B, the foam pillar 930a of the foam may have a negative draft angle that keeps the arch cookie 960a up against the base of the footbed. Alternatively, as shown in FIG. 9C, the pillar 930b includes a notch with a widened base so that the arch cookie 960b snaps in to once it has been pushed on to the pillars. The plastic arch cookie would be molded accordingly to fit the foam pillar and enhance the mechanical lock. In some examples, the mechanical lock may be installed and/or replaced by the user. In some examples, a kit is sold including a foam base and a plurality of arch cookies of different stiffnesses, and the user may select the arch cookie that provides them with the desired performance (e.g., comfort, support, etc.). In at least some examples, the user may choose the appropriate arch cookie or no arch cookie at all to obtain the performance and/or stiffness they desire. In these examples, it will be understood that the arch cookies may be of similar shapes, sizes and/or geometries may vary, for example, only in stiffness. Additionally, due to the geometry of the foam, the fit and/or volume of the footbed inside a shoe may be kept substantially similar or constant with any of the available arch cookies or without an arch cookie at all.

Described above is a design and method of creating flexible manufacturing and wearer options for footbeds similar to ones described in the '204 Patent. This flexible configuration allows for the user or manufacturer to selectively choose to use a semi-rigid arch and heel cup. The arch cookie may be joined to the polymer footbed foam via adhesives similar to ones used in "peel-and-stick" situations and give footwear brands and consumers more choices when deciding on final footbed configurations without altering manufacturing processes or internal shoe fit.

It will be appreciated that the various dependent claims and the features set forth therein can be combined in different ways than presented in the initial claims. It will also be appreciated that the features described in connection with individual embodiments may be shared with others of the described embodiments.

## Claims

1. A footwear assembly (300, 500, 800) comprising:
an elastomeric foam layer (330, 530, 830) having a rear foot region, a midfoot region and a front foot region and one or more protrusions (531, 831); and
a semi-rigid arch cookie (360, 560, 860) including:
a heel portion (364, 564);
a pair of arch supports (362a, 362b, 562a, 562b) extending from the heel portion (364, 564) toward a toe region, the pair of arch supports (362a, 362b, 562a, 562b) being of unequal length and having ends that are not connected to one another, the heel portion (364, 564) and the pair of arch supports being continuous (362a, 362b, 562a, 562b); and
at least one window (350, 550, 850) defining a perimeter and being disposed in at least one of the heel portion (364, 564) and the pair of arch supports (362a, 362b, 562a, 562b),
wherein the one or more protrusions (531, 831) align with the at least one window (350, 550, 850) of the semi-rigid arch cookie, each of the one or more protrusions (531, 831) being complementary to one of the at least one window (350, 550, 850), each of the one or more protrusions (531, 831) having a shape and/or size that is equal or similar to one of the at least one window (350, 550, 850), and that aligns with that at least one window (350, 550, 850), and the one or more protrusions (531, 831) having a geometry configured to extend through the complementary at least one window (350, 550, 850) and to interlock with the complementary at least one window (350, 550, 850), wherein the interlocking is provided by the one or more protrusions (531, 831) having a negative draft angle to keep the semi-rigid arch cookie (360, 560, 860) against a base of the elastomeric foam layer (330, 530, 830) or wherein the interlocking is provided by the one or more protrusions (531, 831) having a notch with a widened base into which the semi-rigid arch cookie (360, 560, 860) snaps when the one or more protrusions (531, 831) have been pushed through the complementary at least one window (350, 550, 850).

2. The footwear assembly of claim 1, wherein the heel portion and the pair of arch supports comprise a same material, optionally wherein the heel portion and the pair of arch supports comprise EVA.

3. The footwear assembly of claim 1, wherein the heel portion and the pair of arch supports comprise a material having a rigidity of between 0.01 to 4.5 GPa.

4. The footwear assembly of any preceding claim, wherein the at least one window comprises a plurality of windows disposed in the heel portion and the pair of arch supports, or wherein the at least one window comprises multiple windows in at least one of the arch supports, or wherein the at least one window comprises multiple windows in the heel portion.

5. A footwear assembly of claim 1:
wherein the arch cookie is more rigid than the elastomeric foam layer.

6. The footwear assembly of claim 1, wherein the elastomeric foam layer and the arch cookie are semi-permanently adhered together using a peel-and-stick adhesive.

7. The footwear assembly of claim 1, wherein the elastomeric foam layer has a first stiffness, and the elastomeric foam layer and the arch cookie combined have a second stiffness, the second stiffness being greater than the first stiffness.

8. A method of making a footwear assembly according to any one of the preceding claims, the method comprising:
forming a semi-rigid arch cookie (360, 560, 860) including a heel portion (364, 564), a pair of arch supports (362a, 362b, 562a, 562b) extending from the heel portion (364, 564) toward a toe region, the pair of arch supports (362a, 362b, 562a, 562b) being of unequal length, the heel portion (364, 564) and the pair of arch supports (362a, 362b, 562a, 562b) being continuous, and at least one window (350, 550, 850) disposed in at least one of the heel portion (364, 564) and the pair of arch supports (362a, 362b, 562a, 562b);
separately forming an elastomeric foam layer (330, 530, 830) having a rear foot region, a midfoot region and a front foot region;
passing portions of the elastomeric foam layer (330, 530, 830) through the at least one window (350, 550, 850); and
coupling the semi-rigid arch cookie (360, 560, 860) and the elastomeric foam layer (330, 530, 830).

9. The method of claim 8, wherein coupling the semi-rigid arch cookie and the foam layer comprises coupling the semi-rigid arch cookie and the foam layer with a semi-permanent adhesive.

10. The method of claim 8, wherein coupling the semi-rigid arch cookie and the foam layer comprises coupling the semi-rigid arch cookie and the foam layer with a peel-and-stick adhesive.

11. The method of claim 8, wherein forming the semi-rigid arch cookie comprises:
choosing a sample patient population;
positioning each patient's foot in a sub-talar neutral position;
collecting three-dimensional data of at least one foot of each patient in a scan, and placing the scan in a collection of scans representing the sample patient population;
separating the collection of scans into groupings based on each patient's preferred shoe size;
aligning the scans within each grouping by using correspondence point pairs;
obtaining contour data from the scans;
applying at least one filter to the scans;
averaging the scans;
obtaining seven representative measurements for each grouping, the seven representative measurements including forefoot width, rearfoot width, arch height, arch length, heel-to-head of first metatarsal phalangeal joint, heel-to-head of fifth metatarsal phalangeal joint, and foot length; and
modeling a semi-rigid arch cookie based on the seven representative measurements;
wherein modeling a semi-rigid arch cookie based on the seven representative measurements includes determining a footbed dimension from an anthropometric dimension and a differential coefficient for at least one shoe size.

## Patentansprüche

1. Schuhanordnung (300, 500, 800), die umfasst:
eine elastomere Schaumschicht (330, 530, 830) mit einem Rückfußbereich, einem Mittelfußbereich und einem Vorfußbereich sowie einem oder mehreren Vorsprüngen (531, 831); und
einen halbstarren Fußgewölbeeinsatz (360, 560, 860), der umfasst:
einen Fersenabschnitt (364, 564);
ein Paar von Fußgewölbestützen (362a, 362b, 562a, 562b), die sich vom Fersenabschnitt (364, 564) in Richtung eines Zehenbereichs erstrecken, wobei das Paar von Fußgewölbestützen (362a, 362b, 562a, 562b) unterschiedliche Längen aufweist und Enden besitzt, die nicht miteinander verbunden sind, wobei der Fersenabschnitt (364, 564) und das Paar von Fußgewölbestützen kontinuierlich ausgebildet sind (362a, 362b, 562a, 562b); und
mindestens ein Fenster (350, 550, 850), das einen Umfang definiert und in mindestens einem der Fersenabschnitte (364, 564) und dem Paar von Fußgewölbestützen (362a, 362b, 562a, 562b) angeordnet ist,
wobei der eine oder die mehreren Vorsprünge (531, 831) mit dem mindestens einen Fenster (350, 550, 850) des halbstarren Fußgewölbeeinsatzes ausgerichtet sind, wobei jeder der einen oder mehreren Vorsprünge (531, 831) zu einem der mindestens einen Fenster (350, 550, 850) komplementär ist, wobei jeder der einen oder mehreren Vorsprünge (531, 831) eine Form und/oder Größe aufweist, die gleich oder ähnlich zu einem der mindestens einen Fenster (350, 550, 850) ist und mit diesem mindestens einen Fenster (350, 550, 850) ausgerichtet ist, und wobei der eine oder die mehreren Vorsprünge (531, 831) eine Geometrie aufweisen, die so konfiguriert ist, dass sie sich durch das komplementäre mindestens eine Fenster (350, 550, 850) erstrecken und mit dem komplementären mindestens einen Fenster (350, 550, 850) verriegeln, wobei die Verriegelung dadurch bereitgestellt wird, dass der eine oder die mehreren Vorsprünge (531, 831) einen negativen Entformungswinkel aufweisen, um den halbstarren Fußgewölbeeinsatz (360, 560, 860) gegen eine Basis der elastomeren Schaumschicht (330, 530, 830) zu halten, oder wobei die Verriegelung dadurch bereitgestellt wird, dass der eine oder die mehreren Vorsprünge (531, 831) eine Kerbe mit einer verbreiterten Basis aufweisen, in welche der halbstarre Fußgewölbeeinsatz (360, 560, 860) einrastet, wenn der eine oder die mehreren Vorsprünge (531, 831) durch das komplementäre mindestens eine Fenster (350, 550, 850) hindurchgedrückt worden sind.

2. Schuhanordnung nach Anspruch 1, wobei der Fersenabschnitt und das Paar von Fußgewölbestützen aus demselben Material bestehen, optional wobei der Fersenabschnitt und das Paar von Fußgewölbestützen aus EVA bestehen.

3. Schuhanordnung nach Anspruch 1, wobei der Fersenabschnitt und das Paar von Fußgewölbestützen ein Material mit einer Steifigkeit zwischen 0,01 und 4,5 GPa umfassen.

4. Schuhanordnung nach einem der vorhergehenden Ansprüche, wobei das mindestens eine Fenster eine Vielzahl von Fenstern umfasst, die im Fersenabschnitt und im Paar von Fußgewölbestützen angeordnet sind, oder wobei das mindestens eine Fenster mehrere Fenster in mindestens einer der Fußgewölbestützen umfasst, oder wobei das mindestens eine Fenster mehrere Fenster im Fersenabschnitt umfasst.

5. Schuhanordnung nach Anspruch 1,
wobei der Fußgewölbeeinsatz steifer ist als die elastomere Schaumschicht.

6. Schuhanordnung nach Anspruch 1, wobei die elastomere Schaumschicht und der Fußgewölbeeinsatz unter Verwendung eines Peel-and-Stick-Klebstoffs semipermanent miteinander verbunden sind.

7. Schuhanordnung nach Anspruch 1, wobei die elastomere Schaumschicht eine erste Steifigkeit aufweist, und die elastomere Schaumschicht und der Fußgewölbeeinsatz in Kombination eine zweite Steifigkeit aufweisen, wobei die zweite Steifigkeit größer ist als die erste Steifigkeit.

8. Verfahren zur Herstellung einer Schuhanordnung nach einem der vorhergehenden Ansprüche, wobei das Verfahren umfasst:
Ausbilden eines halbstarren Fußgewölbeeinsatzes (360, 560, 860), der einen Fersenabschnitt (364, 564), ein Paar von Fußgewölbestützen (362a, 362b, 562a, 562b) umfasst, die sich vom Fersenabschnitt (364, 564) in Richtung eines Zehenbereichs erstrecken, wobei das Paar von Fußgewölbestützen (362a, 362b, 562a, 562b) unterschiedliche Längen aufweist, wobei der Fersenabschnitt (364, 564) und das Paar von Fußgewölbestützen (362a, 362b, 562a, 562b) kontinuierlich ausgebildet sind, und mindestens ein Fenster (350, 550, 850) in mindestens einem der Fersenabschnitte (364, 564) und dem Paar von Fußgewölbestützen (362a, 362b, 562a, 562b) angeordnet ist;
getrenntes Ausbilden einer elastomeren Schaumschicht (330, 530, 830) mit einem Rückfußbereich, einem Mittelfußbereich und einem Vorfußbereich;
Durchführen von Abschnitten der elastomeren Schaumschicht (330, 530, 830) durch das mindestens eine Fenster (350, 550, 850); und
Verbinden des halbstarren Fußgewölbeeinsatzes (360, 560, 860) mit der elastomeren Schaumschicht (330, 530, 830).

9. Verfahren nach Anspruch 8, wobei das Verbinden des halbstarren Fußgewölbeeinsatzes und der Schaumschicht ein Verbinden des halbstarren Fußgewölbeeinsatzes und der Schaumschicht mittels eines semipermanenten Klebstoffs umfasst.

10. Verfahren nach Anspruch 8, wobei das Verbinden des halbstarren Fußgewölbeeinsatzes und der Schaumschicht ein Verbinden des halbstarren Fußgewölbeeinsatzes und der Schaumschicht mittels eines Peel-and-Stick-Klebstoffs umfasst.

11. Verfahren nach Anspruch 8, wobei das Ausbilden des halbstarren Fußgewölbeeinsatzes umfasst:
Auswählen einer Stichproben-Patientenpopulation;
Positionieren des Fußes jedes Patienten in einer subtalaren Neutralstellung;
Erfassen dreidimensionaler Daten von mindestens einem Fuß jedes Patienten in einem Scan und Einordnen des Scans in eine Sammlung von Scans, die die Stichproben-Patientenpopulation repräsentieren;
Aufteilen der Sammlung von Scans in Gruppierungen basierend auf der von jedem Patienten bevorzugten Schuhgröße;
Ausrichten der Scans innerhalb jeder Gruppierung unter Verwendung von Korrespondenzpunktpaaren;
Ermitteln von Konturdaten aus den Scans;
Anwenden mindestens eines Filters auf die Scans;
Mitteln der Scans;
Ermitteln von sieben repräsentativen Messwerten für jede Gruppierung, wobei die sieben repräsentativen Messwerte Vorfußbreite, Rückfußbreite, Fußgewölbehöhe, Fußgewölbelänge, Ferse-bis-Kopf-des-ersten-Metatarsophalangealgelenks, Ferse-bis-Kopf-des-fünften-Metatarsophalangealgelenks sowie Fußlänge umfassen; und
Modellieren eines halbstarren Fußgewölbeeinsatzes auf der Grundlage der sieben repräsentativen Messwerte;
wobei das Modellieren eines halbstarren Fußgewölbeeinsatzes auf der Grundlage der sieben repräsentativen Messwerte das Bestimmen einer Fußbettabmessung aus einer anthropometrischen Abmessung und einem Differenzialkoeffizienten für mindestens eine Schuhgröße umfasst.

## Revendications

1. Ensemble chaussant (300, 500, 800) comprenant :
une couche de mousse élastomère (330, 530, 830) présentant une région de pied arrière, une région de mi-pied, une région de pied avant et une ou plusieurs protubérance(s) (531, 831) ; et
un coussin de soutien de voûte plantaire semi-rigide (360, 560, 860) comportant :
une partie de talon (364, 564) ;
une paire de supports de voûte plantaire (362a, 362b, 562a, 562b) s'étendant de la partie de talon (364, 564) vers une région d'orteils, la paire de supports de voûte plantaire (362a, 362b, 562a, 562b) étant de longueur inégale et présentant des extrémités qui ne sont pas reliées l'une à l'autre, la partie de talon (364, 564) et la paire de supports de voûte plantaire (362a, 362b, 562a, 562b) étant continues ; et
au moins une fenêtre (350, 550, 850) définissant un périmètre et étant disposée dans au moins l'une parmi la partie de talon (364, 564) et la paire de supports de voûte plantaire (362a, 362b, 562a, 562b),
dans lequel la ou les protubérance(s) (531, 831) s'aligne/s'alignent avec l'au moins une fenêtre (350, 550, 850) du coussin de soutien de voûte plantaire semi-rigide, chacune de la ou des protubérance(s) (531, 831) étant complémentaire à l'une parmi l'au moins une fenêtre (350, 550, 850), chacune de la ou des protubérance(s) (531, 831) présentant une forme et/ou une taille qui sont égale(s) ou similaire(s) à l'une parmi l'au moins une fenêtre (350, 550, 850), et qui s'aligne avec cette au moins une fenêtre (350, 550, 850), et la ou les protubérance(s) (531, 831) présentant une géométrie configurée pour s'étendre à travers l'au moins une fenêtre complémentaire (350, 550, 850) et pour s'emboîter avec l'au moins une fenêtre complémentaire (350, 550, 850), dans lequel l'emboîtement est assuré par la ou les protubérance(s) (531, 831) présentant un angle de dépouille négatif pour maintenir le coussin de soutien de voûte plantaire semi-rigide (360, 560, 860) contre une base de la couche de mousse élastomère (330, 530, 830) ou dans lequel l'emboîtement est assuré par la ou les protubérance(s) (531, 831) présentant une encoche avec une base élargie dans laquelle le coussin de soutien de voûte plantaire semi-rigide (360, 560, 860) se loge lorsque la ou les protubérance(s) (531, 831) a/ont été poussée(s) à travers l'au moins une fenêtre complémentaire (350, 550, 850).

2. Ensemble chaussant selon la revendication 1, dans lequel la partie de talon et la paire de supports de voûte plantaire comprennent un même matériau, optionnellement dans lequel la partie de talon et la paire de supports de voûte plantaire comprennent de l'EVA.

3. Ensemble chaussant selon la revendication 1, dans lequel la partie de talon et la paire de supports de voûte plantaire comprennent un matériau présentant une rigidité comprise entre 0,01 et 4,5 GPa.

4. Ensemble chaussant selon l'une des revendications précédentes, dans lequel l'au moins une fenêtre comprend une pluralité de fenêtres disposées dans la partie de talon et la paire de supports de voûte plantaire, ou dans lequel l'au moins une fenêtre comprend de multiples fenêtres dans la partie de talon.

5. Ensemble chaussant selon la revendication 1 :
dans lequel le coussin de soutien de voûte plantaire est plus rigide que la couche de mousse élastomère.

6. Ensemble chaussant selon la revendication 1, dans lequel la couche de mousse élastomère et le coussin de soutien de voûte plantaire sont collés de manière semi-permanente l'un à l'autre à l'aide d'un adhésif autocollant.

7. Ensemble chaussant selon la revendication 1, dans lequel la couche de mousse élastomère présente une première rigidité, et la couche de mousse élastomère et le coussin de soutien de voûte plantaire combinés présentent une deuxième rigidité, la deuxième rigidité étant supérieure à la première rigidité.

8. Procédé de réalisation d'un ensemble chaussant selon l'une quelconque des revendications précédentes, le procédé comprenant :
la formation d'un coussin de soutien de voûte plantaire semi-rigide (360, 560, 860) comportant une partie de talon (364, 564), une paire de supports de voûte plantaire (362a, 362b, 562a, 562b) s'étendant de la partie de talon (364, 564) vers une région d'orteils, la paire de supports de voûte plantaire (362a, 362b, 562a, 562b) étant de longueur inégale, la partie de talon (364, 564) et la paire de supports de voûte plantaire (362a, 362b, 562a, 562b) étant continues, et au moins une fenêtre (350, 550, 850) disposée dans au moins l'une parmi la partie de talon (364, 564) et la paire de supports de voûte plantaire (362a, 362b, 562a, 562b) ;
la formation séparée d'une couche de mousse élastomère (330, 530, 830) présentant une région de pied arrière, une région de mi-pied et une région de pied avant ;
le passage de parties de la couche de mousse élastomère (330, 530, 830) à travers l'au moins une fenêtre (350, 550, 850) ; et
le couplage du coussin de soutien de voûte plantaire semi-rigide (360, 560, 860) et de la couche de mousse élastomère (330, 530, 830).

9. Procédé selon la revendication 8, dans lequel le couplage du coussin de soutien de voûte plantaire semi-rigide et de la couche de mousse comprend le couplage du coussin de soutien de voûte plantaire semi-rigide et de la couche de mousse avec un adhésif semipermanent.

10. Procédé selon la revendication 8, dans lequel le couplage du coussin de soutien de voûte plantaire semi-rigide et de la couche de mousse comprend le couplage du coussin de soutien de voûte plantaire semi-rigide et de la couche de mousse avec un adhésif autocollant.

11. Procédé selon la revendication 8, dans lequel la formation du coussin de soutien de voûte plantaire comprend :
la sélection d'une population de patients échantillons ;
le positionnement de chaque pied de patient dans une position neutre sous-talaire ;
la collecte de données tridimensionnelles d'au moins un pied de chaque patient lors d'une numérisation, et le placement de la numérisation dans une collection de numérisations représentant la population de patients échantillons ;
la séparation de la collection de numérisations en groupements sur la base de la taille de chaussure préférée de chaque patient ;
l'alignement des numérisations dans chaque groupement en utilisant des paires de points de correspondance ;
l'obtention de données de contour à partir des numérisations ;
l'application d'au moins un filtre aux numérisations ;
l'établissement d'une moyenne des numérisations ;
l'obtention de sept mesures représentatives pour chaque regroupement, les sept mesures représentatives incluant la largeur d'avant-pied, la largeur d'arrière-pied, la hauteur de voûte plantaire, la longueur de voûte plantaire, le talon-tête de la première articulation métatarso-phalangienne, le talon-tête de la cinquième articulation métatarso-phalangienne, et la longueur du pied ; et
la modélisation d'un coussin de soutien de voûte plantaire semi-rigide sur la base des sept mesures représentatives ;
dans lequel la modélisation d'un coussin de soutien de voûte plantaire semi-rigide sur la base des sept mesures représentatives comporte la détermination d'une dimension de lit de pied à partir d'une dimension anthropométrique et d'un coefficient différentiel pour au moins une taille de chaussure.
